# EUROPEAN PATENT APPLICATION

(11) **EP 4 579 557 A1**
(43) Date of publication of application: **02.07.2025**
(21) Application number: 23864692.1
(22) Date of filing: 12.09.2023
(51) Int. Cl.: G06Q 30/02

(54) **ADVERTISEMENT PLACEMENT METHOD AND APPARATUS, CLOUD SERVER, AND READABLE STORAGE MEDIUM**

(30) Priority: 16.09.2022 CN 202211133060
(71) Applicant: Petal Cloud Technology Co., Ltd., Dongguan, Guangdong 523799 (CN)
(72) Inventor: JIANG, Song, Shenzhen, Guangdong 518129 (CN); HONG, Sibao, Shenzhen, Guangdong 518129 (CN); XIA, Mingzhen, Shenzhen, Guangdong 518129 (CN)
(74) Representative: Grünecker Patent- und Rechtsanwälte PartG mbB
(86) International application number: PCT/CN2023/118231
(87) International publication number: WO 2024/055960

(57) **Abstract**

This application relates to the field of communication technologies, and provides an advertisement delivery method and apparatus, a cloud server, and a readable storage medium, to resolve a problem of poor delivery effect of an existing online advertisement. The method is applied to the cloud server, and includes: receiving an advertisement request sent by a first terminal device, where the advertisement request includes an application identifier and a device identifier of the first terminal device; determining, based on the device identifier, a target advertisement creative from a preset advertisement creative library corresponding to the application identifier, where the target advertisement creative is a display style of a target advertisement on an advertisement slot of an application to which the application identifier belongs, and the preset advertisement creative library includes at least one advertisement creative uploaded by an advertiser to the cloud server; determining a target advertisement material from a preset material library based on the target advertisement creative and the device identifier, where the target advertisement material includes one or more of a picture, a video, a text, and a link; splicing the target advertisement material based on the target advertisement creative to obtain the target advertisement; and delivering the target advertisement to the advertisement slot.

## Description

This application claims priority to Chinese Patent Application No. 202211133060.1, filed with the China National Intellectual Property Administration on September 16, 2022 and entitled "ADVERTISEMENT DELIVERY METHOD AND APPARATUS, CLOUD SERVER, AND READABLE STORAGE MEDIUM", which is incorporated herein by reference in its entirety.

### TECHNICAL FIELD

This application relates to the field of communication technologies, and in particular, to an advertisement delivery method and apparatus, a cloud server, and a readable storage medium.

### BACKGROUND

With development of Internet technologies, online advertisements gradually replace offline advertisements. An advertiser may usually display, by using an online advertisement system, advertisement content like a text, a picture, or a video on an advertisement slot of a media platform used by a user. Specifically, the advertiser needs to upload an advertisement material like a picture, a video, or a text to the online advertisement system in an advertisement display style specified for the advertisement slot of the media platform, and set a corresponding user tag for the advertisement material. In this way, after receiving an advertisement request from the media platform, the online advertisement system may match the corresponding advertisement material based on the user tag, and deliver the matched advertisement material to the advertisement slot of the media platform in the specified advertisement display style.

Although the existing online advertisement system may display different pictures, videos, or texts at a same location on the advertisement slot based on the user tag, to display different advertisement materials to different types of users, advertisement display styles are all fixed styles specified by the media platform, and display styles are monotonous. However, different types of users have different degrees of interest in a same advertisement display style, resulting in poor delivery effect of online advertisements.

### SUMMARY

This application provides an advertisement delivery method and apparatus, a cloud server, and a readable storage medium, to resolve a problem of poor delivery effect of an existing online advertisement to some extent.

To achieve the foregoing objective, the following technical solutions are used in this application.

According to a first aspect, this application provides an advertisement delivery method, applied to a cloud server. The method includes:
receiving an advertisement request sent by a first terminal device, where the advertisement request includes an application identifier and a device identifier of the first terminal device; determining, based on the device identifier, a target advertisement creative from a preset advertisement creative library corresponding to the application identifier, where the target advertisement creative is a display style of a target advertisement on an advertisement slot of an application to which the application identifier belongs, and the preset advertisement creative library includes at least one advertisement creative that corresponds to the application identifier and that is uploaded by an advertiser to a cloud server; determining a target advertisement material from a preset material library based on the target advertisement creative and the device identifier, where the target advertisement material includes one or more of a picture, a video, a text, and a link; splicing the target advertisement material based on the target advertisement creative to obtain the target advertisement; and delivering the target advertisement to the advertisement slot.

According to the advertisement delivery method provided in this application, the cloud server prestores different advertisement creatives and corresponding advertisement materials that are set by the advertiser for different types of users. When receiving the advertisement request sent by the first terminal device, the cloud server may first determine, from the preset advertisement creative library corresponding to the application identifier, the target advertisement creative that matches the user indicated by the device identifier of the first terminal device; then determine, from the preset material library based on a type of a material required in the target advertisement creative, the target advertisement material that matches the user indicated by the device identifier and that includes one or more of a picture, a video, a text, and a link; and splice the target advertisement material based on the target advertisement creative, to deliver, in the display style indicated by the target advertisement creative, the target advertisement material to the advertisement slot of the application to which the application identifier belongs. In this way, different advertisement display styles and target advertisement content are matched for different types of users, and the delivered target advertisement better meets interest of the users. This improves delivery effect of an online advertisement.

**In** a possible implementation of the first aspect, the determining, based on the device identifier, a target advertisement creative from a preset advertisement creative library corresponding to the application identifier includes:
if a corresponding audience tag is obtained from a user information big data platform based on the device identifier, determining, from the preset advertisement creative library corresponding to the application identifier, the target advertisement creative corresponding to the audience tag.

**In** the possible implementation, the user information big data platform may be used to store user information of a user of the first terminal device. The cloud server may send a query request to the user information big data platform, where the query request includes the device identifier of the first terminal device. The user information big data platform may determine the corresponding user information based on the device identifier, and perform big data analysis on the user information, to generate the audience tag corresponding to the device identifier, and send the generated audience tag to the cloud server. **In** this way, the cloud server determines, from the preset advertisement creative library, the target advertisement creative corresponding to the audience tag.

**In** a possible implementation of the first aspect, the determining, from the preset advertisement creative library corresponding to the application identifier, the target advertisement creative corresponding to the audience tag includes:
if a plurality of advertisement creatives that match the audience tag exist in the preset advertisement creative library, determining, as the target advertisement creative, an advertisement creative with a highest effective cost per mille in the plurality of advertisement creatives.

**In** the possible implementation, the cloud server may determine an audience tag set corresponding to the preset advertisement creative library, where the audience tag set includes an audience tag corresponding to each advertisement creative in the preset advertisement creative library; and determine, as the target advertisement creative, an advertisement creative corresponding to a first audience tag that is in the preset advertisement creative library and that matches the audience tag corresponding to the device identifier, so that the target advertisement creative better meets interest of the user of the first terminal device.

**In** a possible implementation of the first aspect, the method further includes:
if no advertisement creative that matches the audience tag exists in the preset advertisement creative library, determining, as the target advertisement creative, an advertisement creative with a highest effective cost per mille in the preset advertisement creative library.

**In** a possible implementation of the first aspect, the method further includes:
if no corresponding audience tag is obtained from the user information big data platform based on the device identifier, determining, as the target advertisement creative, an advertisement creative with a highest effective cost per mille in the preset advertisement creative library.

**In** the possible implementation, if the user uses the first terminal device for the first time or the device identifier of the first terminal device changes, the user information big data platform may not store the user information corresponding to the device identifier of the first terminal device, or may fail to find the user information corresponding to a changed device identifier of the first terminal device. Consequently, the user information big data platform cannot generate the corresponding audience tag based on the user information, and the cloud server cannot obtain, from the user information big data platform, the audience tag corresponding to the device identifier of the first terminal device. **In** this case, the cloud server may select the advertisement creative with the largest effective cost per mille as the target advertisement creative.

**In** a possible implementation of the first aspect, the method further includes:
obtaining delivery information of the target advertisement on the first terminal device, where the delivery information includes browsing duration and/or a click-through rate of the target advertisement on the first terminal device; and adjusting, based on the delivery information, the audience tag corresponding to the device identifier.

**In** the possible implementation, the cloud server may determine a degree of interest of the user of the first terminal device in the target advertisement based on the obtained browsing duration and/or click-through rate of the target advertisement on the first terminal device, and further adjust, based on the degree of interest of the user in the target advertisement, the audience tag corresponding to the device identifier, in other words, adjust an association between the first terminal device and the target advertisement creative, so that the target advertisement creative and the advertisement material that better meet interest of the user are matched for the user based on an adjusted audience tag.

In a possible implementation of the first aspect, the method further includes: obtaining at least one advertisement creative that is set by the advertiser on a second terminal device, and updating the preset advertisement creative library based on the at least one advertisement creative.

According to a second aspect, this application provides an advertisement delivery apparatus. The apparatus includes:
a request receiving unit, configured to receive an advertisement request sent by a first terminal device, where the advertisement request includes an application identifier and a device identifier of the first terminal device;
a creative determining unit, configured to determine, based on the device identifier, a target advertisement creative from a preset advertisement creative library corresponding to the application identifier, where the target advertisement creative is a display style of a target advertisement on an advertisement slot of an application to which the application identifier belongs, and the preset advertisement creative library includes at least one advertisement creative that corresponds to the application identifier and that is uploaded by an advertiser to a cloud server;
a material determining unit, configured to determine a target advertisement material from a preset material library based on the target advertisement creative and the device identifier, where the target advertisement material includes one or more of a picture, a video, a text, and a link;
an advertisement splicing unit, configured to splice the target advertisement material based on the target advertisement creative to obtain the target advertisement; and
an advertisement delivery unit, configured to deliver the target advertisement to the advertisement slot.

**In** a possible implementation of the second aspect, that the creative determining unit determines, based on the device identifier, a target advertisement creative from a preset advertisement creative library corresponding to the application identifier includes:
if a corresponding audience tag is obtained from a user information big data platform based on the device identifier, determining, from the preset advertisement creative library corresponding to the application identifier, the target advertisement creative corresponding to the audience tag.

In a possible implementation of the second aspect, that the creative determining unit determines, from the preset advertisement creative library corresponding to the application identifier, the target advertisement creative corresponding to the audience tag includes:
if a plurality of advertisement creatives that match the audience tag exist in the preset advertisement creative library, determining, as the target advertisement creative, an advertisement creative with a highest effective cost per mille in the plurality of advertisement creatives.

In a possible implementation of the second aspect, the creative determining unit is further configured to:
if no advertisement creative that matches the audience tag exists in the preset advertisement creative library, determine, as the target advertisement creative, an advertisement creative with a highest effective cost per mille in the preset advertisement creative library.

In a possible implementation of the second aspect, the creative determining unit is further configured to:
if no corresponding audience tag is obtained from the user information big data platform based on the device identifier, determine, as the target advertisement creative, an advertisement creative with a highest effective cost per mille in the preset advertisement creative library.

In a possible implementation of the second aspect, the apparatus further includes:
an information obtaining unit, configured to obtain delivery information of the target advertisement on the first terminal device, where the delivery information includes browsing duration and/or a click-through rate of the target advertisement on the first terminal device; and
a tag adjustment unit, configured to adjust, based on the delivery information, the audience tag corresponding to the device identifier.

In a possible implementation of the second aspect, the apparatus further includes:
a creative obtaining unit, configured to: obtain at least one advertisement creative that is set by the advertiser on a second terminal device, and update the preset advertisement creative library based on the at least one advertisement creative.

According to a third aspect, this application provides a cloud server, including a processor. The processor is configured to run a computer program stored in a memory, to implement the method in any one of the possible implementations of the first aspect.

According to a fourth aspect, this application provides a computer-readable storage medium. The computer-readable storage medium stores a computer program. When the computer program is executed by a processor, the method in any one of the possible implementations of the first aspect is implemented.

According to a fifth aspect, this application provides a computer program product. When the computer program product runs on an electronic device, the electronic device is enabled to perform the method in any one of the possible implementations of the first aspect.

For technical effects of the second aspect to the fifth aspect provided in this application, refer to the technical effects of the possible implementations of the first aspect. Details are not described herein again.

### BRIEF DESCRIPTION OF DRAWINGS

FIG. 1 is a diagram of a structure of an online advertisement system according to an embodiment of this application;
FIG. 2 is a diagram of an advertisement display style according to an embodiment of this application;
FIG. 3 is a diagram of a structure of an electronic device according to an embodiment of this application;
FIG. 4 is a schematic flowchart of setting an advertisement creative by an advertiser based on a delivery end platform according to an embodiment of this application;
FIG. 5 is a diagram of a design interface of an advertisement creative according to an embodiment of this application;
FIG. 6 is a diagram of two advertisement creatives according to an embodiment of this application;
FIG. 7 is a diagram of two other advertisement creatives according to an embodiment of this application;
FIG. 8 is a schematic flowchart of an advertisement delivery method according to an embodiment of this application; and
FIG. 9 is a block diagram of a structure of an advertisement delivery apparatus according to an embodiment of this application.

### DESCRIPTION OF EMBODIMENTS

With development of Internet technologies, online advertisements gradually replace offline advertisements. The online advertisement is also referred to as a network advertisement or an Internet advertisement, and is an advertisement delivered on online media such as a short video, a news information flow, or an application splash page, for example, a splash screen advertisement, a banner advertisement, a text link advertisement, a video advertisement, or an information flow advertisement.

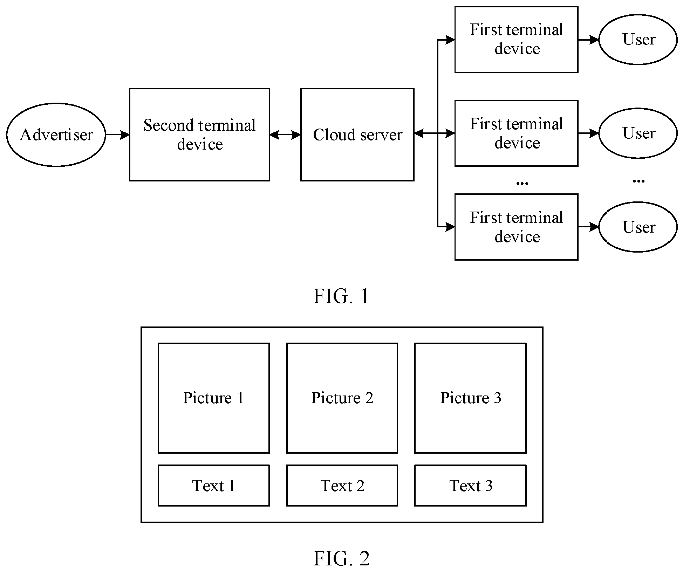

An advertiser may usually display, by using an online advertisement system, advertisement content like a text, a picture, or a video on an advertisement slot of a media platform used by a user. Refer to a diagram of a structure of an online advertisement system in FIG. 1. The online advertisement system includes a cloud server, a media platform on a first terminal device, and a delivery end platform on a second terminal device. An advertiser may upload an advertisement material like a picture, a video, and/or a text to the cloud server through the delivery end platform in an advertisement display style specified for an advertisement slot of the media platform, and set a corresponding user tag for the advertisement material. In this way, after receiving an advertisement request from the media platform, the online advertisement system may match the corresponding advertisement material based on the user tag, and deliver the matched advertisement material to the advertisement slot of the media platform in the advertisement display style specified for the advertisement slot of the media platform.

In an example, an e-commerce advertiser is used as an example. It is assumed that an advertisement delivery requirement of the e-commerce advertiser is: promoting cosmetics and clothing commodities to female users and promoting full-category commodities to other users on an information flow advertisement slot of an application A. Refer to a diagram of an advertisement display style in FIG. 2. An advertisement display style specified for the information flow advertisement slot of the application A is three pictures (namely, a picture 1, a picture 2, and a picture 3 in FIG. 2) and three texts respectively corresponding to the three pictures (namely, a text 1, a text 2, and a text 3 in FIG. 2). In this case, the e-commerce advertiser may upload the advertisement material on the delivery end platform in advance in the advertisement display style specified for the information flow advertisement slot of the application A; establish, for the female users, a first advertisement material library including pictures of the cosmetics and clothing commodities and corresponding texts; establish, for the other users, a second advertisement material library including pictures of the full-category commodities and corresponding texts; and send the first advertisement material library, the second advertisement material library, and the corresponding user tag to the cloud server for storage. After receiving the advertisement request sent by the terminal device, the cloud server may determine, based on the application identifier, that the advertisement slot is the advertisement slot of the application A, and determine whether the user tag of the terminal device is female. If the user tag of the terminal device is female, three pictures of the cosmetics and clothing commodities are selected from the first advertisement material library corresponding to the application A, and the three selected pictures and corresponding three texts are delivered to the information flow advertisement slot of the application A in the specified advertisement display style. If the user tag of the terminal device is not female, three pictures are selected from the second advertisement material library, and the selected three pictures and corresponding three texts are delivered to the information flow advertisement slot of the application A in the specified advertisement display style.

Although the existing online advertisement system may display different pictures, videos, or texts at a same location on the advertisement slot based on the user tag, to display different advertisement content to different types of users, advertisement display styles are all fixed styles specified by the media platform, and display styles are monotonous. However, different types of users have different degrees of interest in a same advertisement display style, resulting in poor delivery effect of online advertisements.

Therefore, for the foregoing problem, this application provides an advertisement delivery method and apparatus, a cloud server, and a readable storage medium. After receiving an advertisement request that is sent by a first terminal device and that includes a device identifier and an application identifier, the cloud server may first determine, from a preset advertisement creative library corresponding to the application identifier, a target advertisement creative that matches the device identifier, and then determine, from a preset material library based on a type of an advertisement material required for the target advertisement creative, a target advertisement material that matches a user indicated by the device identifier, to deliver the target advertisement material to an advertisement slot of an application in a display style corresponding to the target advertisement creative, so that advertisements in different display styles and with different display content are delivered to different types of users. In this way, a delivered target advertisement better meets interest of the user, and delivery effect of the target advertisement is better.

The following describes the technical solutions in embodiments of this application with reference to accompanying drawings and related embodiments in embodiments of this application. In descriptions of embodiments of this application, terms used in the following embodiments are merely intended for a purpose of describing specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or an implicit indication of a quantity of indicated technical features.

In embodiments of this application, the word "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

The advertisement delivery method provided in embodiments of this application may be applied to the cloud server. The cloud server may be an electronic device like a mobile phone, a tablet computer, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a server. A specific type of the electronic device is not limited in embodiments of this application.

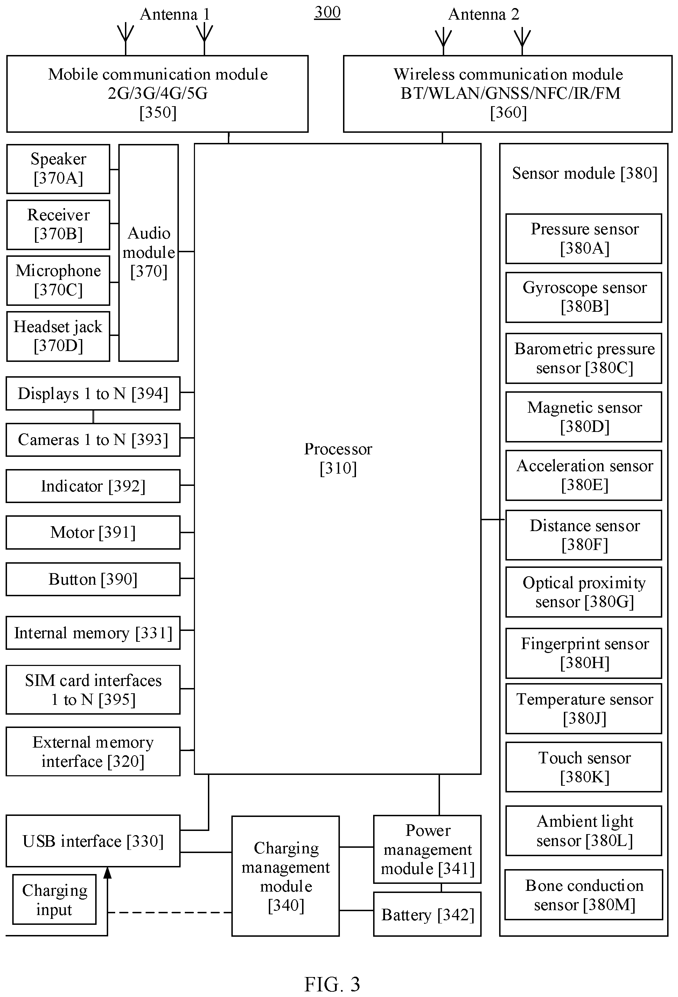

FIG. 3 is a diagram of a structure of an electronic device 300 according to an embodiment of this application. The electronic device 300 may include a processor 310, an external memory interface 320, an internal memory 331, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identity module (subscriber identity module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

It may be understood that the structure shown in this embodiment of this application does not constitute a specific limitation on the electronic device 300. In some other embodiments of this application, the electronic device 300 may include more or fewer components than those shown in the figure, or a combination of some components, or splits from some components, or an arrangement of different components. The components shown in the figure may be implemented by hardware, software, or a combination of software and hardware.

For example, when the electronic device 300 is a mobile phone or a tablet computer, the electronic device 300 may include all components shown in the figure, or may include only some components shown in the figure.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 300. The controller may generate an operation control signal based on instruction operation code and a time sequence signal, to complete control of instruction reading and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly call the instructions or the data from the memory. This avoids repeated access, and reduces waiting time of the processor 310, to improve system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 330 is an interface that conforms to a USB standard specification, and may be specifically a mini USB interface, a micro USB interface, a USB type-C interface, or the like. The USB interface 330 may be configured to connect to a charger to charge the electronic device 300, or may be configured to perform data transmission between the electronic device 300 and a peripheral device, or may be configured to connect to a headset to play an audio through the headset. The interface may be further configured to connect to another electronic device, for example, an AR device.

It may be understood that an interface connection relationship between modules illustrated in this embodiment of this application is merely an example for description, and does not constitute a limitation on the structure of the electronic device 300. In some other embodiments of this application, the electronic device 300 may alternatively use an interface connection manner different from that in the foregoing embodiment, or use a combination of a plurality of interface connection manners.

The charging management module 340 is configured to receive a charging input from a charger. The charger may be a wireless charger or a wired charger. In some embodiments of wired charging, the charging management module 340 may receive a charging input of the wired charger through the USB interface 330. In some embodiments of wireless charging, the charging management module 340 may receive a wireless charging input through a wireless charging coil of the electronic device 300. When charging the battery 342, the charging management module 340 may further supply power to the electronic device through the power management module 341.

The power management module 341 is configured to connect to the battery 342, the charging management module 340, and the processor 310. The power management module 341 receives an input from the battery 342 and/or the charging management module 340, and supplies power to the processor 310, the internal memory 331, the external memory interface 320, the display 394, the camera 393, the wireless communication module 360, and the like. The power management module 341 may be further configured to monitor parameters such as a battery capacity, a battery cycle count, and a battery health status (electric leakage or impedance).

In some other embodiments, the power management module 341 may alternatively be disposed in the processor 310. In some other embodiments, the power management module 341 and the charging management module 340 may alternatively be disposed in a same device.

A wireless communication function of the electronic device 300 may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device 300 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a solution, applied to the electronic device 300, to wireless communication including 2G/3G/4G/5G or the like. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit a processed electromagnetic wave to the modem processor for demodulation. The mobile communication module 350 may further amplify a signal modulated by the modem processor, and convert an amplified signal into an electromagnetic wave for radiation through the antenna 1.

In some embodiments, at least some functional modules in the mobile communication module 350 may be disposed in the processor 310. In some embodiments, at least some functional modules in the mobile communication module 350 may be disposed in a same device as at least some modules in the processor 310.

The modem processor may include a modulator and a demodulator. The modulator is configured to modulate a to-be-sent low-frequency baseband signal into a medium- and highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 370A, the receiver 370B, or the like), or displays an image or a video through the display 394. In some embodiments, the modem processor may be an independent component. In some other embodiments, the modem processor may be independent of the processor 310, and is disposed in a same component as the mobile communication module 350 or another functional module.

The wireless communication module 360 may provide a solution, applied to the electronic device 300, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 360 may be one or more components integrating at least one communication processor module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert a processed signal into an electromagnetic wave for radiation through the antenna 2.

In some embodiments, in the electronic device 300, the antenna 1 and the mobile communication module 350 are coupled, and the antenna 2 and the wireless communication module 360 are coupled, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS)

The electronic device 300 may implement a display function through the GPU, the display 394, the application processor, and the like. The GPU is a microprocessor for image processing, and is connected to the display 394 and the application processor. The GPU is configured to: perform mathematical and geometric computation, and render an image. The processor 310 may include one or more GPUs that execute program instructions to generate or change display information.

The display 394 is configured to display an image, a video, and the like, for example, a first lighting image and a second lighting image in embodiments of this application. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 300 may include one or N displays 394, where N is a positive integer greater than 1.

The electronic device 300 may implement a photographing function through the ISP, the camera 393, the video codec, the GPU, the display 394, the application processor, and the like.

The ISP is configured to process data fed back by the camera 393. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and a skin tone of the image. The ISP may further optimize parameters such as exposure and a color temperature of a photographing scenario. In some embodiments, the ISP may be disposed in the camera 393.

The camera 393 is configured to capture a still image or a video. An optical image of an object is generated through the lens, and is projected onto the photosensitive element. A focal segment of the lens may indicate a framing range of the camera. A smaller focal segment of the lens indicates a larger framing range of the lens. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV.

In this application, the electronic device 300 may include the camera 393 with two or more focal lengths.

The digital signal processor is configured to process a digital signal, and may process another digital signal in addition to the digital image signal. For example, when the electronic device 300 selects a frequency, the digital signal processor is configured to perform Fourier transform on frequency energy.

The video codec is configured to compress or decompress a digital video. The electronic device 300 may support one or more video codecs. In this way, the electronic device 300 may play or record videos in a plurality of types of encoding formats, for example, moving picture experts group (moving picture experts group, MPEG)-1, MPEG-1, MPEG-3, and MPEG-4.

The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the electronic device 300 may be implemented through the NPU, for example, image recognition, facial recognition, speech recognition, and text understanding.

In this embodiment of this application, the NPU or another processor may be configured to perform operations such as analysis and processing on an image in a video stored in the electronic device 300.

The external memory interface 320 may be configured to connect to an external memory card, for example, a micro SD card, to extend a storage capability of the electronic device 300. The external memory card communicates with the processor 310 through the external memory interface 320, to implement a data storage function. For example, files such as music and videos are stored in the external memory card.

The internal memory 331 may be configured to store computer-executable program code. The executable program code includes instructions. The processor 310 runs the instructions stored in the internal memory 331, to perform various function applications of the electronic device 300 and data processing. The internal memory 331 may include a program storage area and a data storage area. The program storage area may store an operating system, an application required by at least one function (for example, a sound playing function or an image playing function). The data storage area may store data (for example, audio data or an address book) created during use of the electronic device 300.

In addition, the internal memory 331 may include a high-speed random access memory, and may further include a nonvolatile memory, for example, at least one magnetic disk storage device, a flash memory, or a universal flash storage (universal flash storage, UFS).

The electronic device 300 may implement an audio function through the audio module 370, the speaker 370A, the receiver 370B, the microphone 370C, the headset jack 370D, the application processor, and the like.

The audio module 370 is configured to convert a digital audio signal into an analog audio signal for an output, and is also configured to convert an analog audio input into a digital audio signal. The audio module 370 may be further configured to encode and decode an audio signal. In some embodiments, the audio module 370 may be disposed in the processor 310, or some functional modules in the audio module 370 are disposed in the processor 310.

The speaker 370A, also referred to as a "loudspeaker", is configured to convert an audio electrical signal into a sound signal. The electronic device 300 may be used to listen to music or answer a call in a hands-free mode through the speaker 370A.

The receiver 370B, also referred to as an "earpiece", is configured to convert an audio electrical signal into a sound signal. When a call is answered or voice information is received through the electronic device 300, the receiver 370B may be put close to a human ear to listen to a voice.

The microphone 370C, also referred to as a "mike" or a "mic", is configured to convert a sound signal into an electrical signal. When making a call or sending a voice message, a user may make a sound near the microphone 370C through the mouth of the user, to input a sound signal to the microphone 370C. At least one microphone 370C may be disposed in the electronic device 300. In some other embodiments, two microphones 370C may be disposed in the electronic device 300, to collect a sound signal and implement a noise reduction function. In some other embodiments, three, four, or more microphones 370C may alternatively be disposed in the electronic device 300, to collect a sound signal, implement noise reduction, identify a sound source, implement a directional recording function, and the like.

The headset jack 370D is configured to connect to a wired headset. The headset jack 370D may be a USB interface 330, or may be a 3.5 mm open mobile terminal platform (open mobile terminal platform, OMTP) standard interface or cellular telecommunications industry association of the USA (cellular telecommunications industry association of the USA, CTIA) standard interface.

The button 390 includes a power button, a volume button, and the like. The button 390 may be a mechanical button, or may be a touch button. The electronic device 300 may receive a key input, and generate a key signal input related to a user setting and function control of the electronic device 300.

The motor 391 may generate a vibration prompt. The motor 391 may be configured to provide an incoming call vibration prompt and touch vibration feedback. For example, touch operations performed on different applications (for example, photographing and audio playing) may correspond to different vibration feedback effects. The motor 391 may also correspond to different vibration feedback effects for touch operations performed on different areas of the display 394. Different application scenarios (for example, a time reminder, information receiving, an alarm clock, and a game) may also correspond to different vibration feedback effects. Touch vibration feedback effect may be further customized.

The indicator 392 may be an indicator light, and may be configured to indicate a charging status and a power change, or may be configured to indicate a message, a missed call, a notification, and the like.

The SIM card interface 395 is configured to connect to a SIM card. The SIM card may be inserted into the SIM card interface 395 or removed from the SIM card interface 395, to implement contact with or separation from the electronic device 300. The electronic device 300 may support one or N SIM card interfaces, where N is a positive integer greater than 1. The SIM card interface 395 may support a nano-SIM card, a micro-SIM card, a SIM card, and the like. A plurality of cards may be simultaneously inserted into a same SIM card interface 395. The plurality of cards may be of a same type or different types. The SIM card interface 395 is compatible with different types of SIM cards. The SIM card interface 395 is also compatible with an external memory card. The electronic device 300 interacts with a network through the SIM card, to implement functions such as conversation and data communication. In some embodiments, the electronic device 300 uses an eSIM, namely, an embedded SIM card. The eSIM card may be embedded in the electronic device 300, and cannot be separated from the electronic device 300.

The advertisement delivery method provided in this application is applied to a cloud server. The cloud server stores an advertisement creative, an audience tag corresponding to each advertisement creative, and an advertisement material corresponding to each advertisement creative that are preset by an advertiser based on an advertisement delivery requirement. The advertisement creative is a display style of an advertisement on an advertisement slot of an application. Specifically, the advertisement creative indicates a type of an advertisement material in the advertisement, a display specification of the advertisement material, and a display location and a display manner of the advertisement material on the advertisement slot.

By way of example but not limitation, the advertisement slot of the application may be a banner (Banner) displayed on a web page, a splash of the APP, an information flow of news, an interstitial advertisement slot, or the like. The type of the advertisement material may be one or a combination of a picture, a text, a link, and a video. The link may be a text link or a picture link. The picture may be an icon (icon), an app icon, an image including a product, or the like. The display specification of the advertisement material is a specification that needs to be met when the advertisement material is displayed on the advertisement slot, for example, a height and a width of a picture, a quantity of words in a text, a font and a font size, and video playing duration. The display manner of the advertisement material on the advertisement slot may be carousel display, blinking display, or the like.

**In** this embodiment of this application, the advertiser may customize the advertisement creative through a delivery end platform on a second terminal device, set the corresponding audience tag for each advertisement creative, and upload, through the delivery end platform, the advertisement material corresponding to each advertisement creative to the cloud server. For example, the second terminal device may be an electronic device like a mobile phone, a tablet computer, or a notebook computer, and the delivery end platform may be a website running on the electronic device or an application that can be used to edit an advertisement creative.

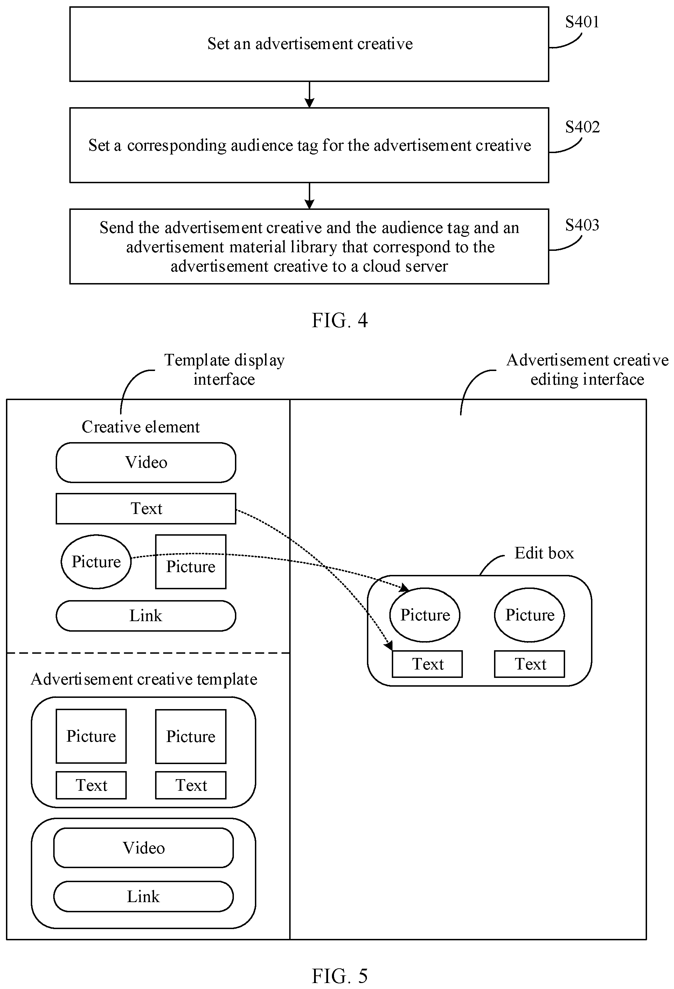

FIG. 4 is a schematic flowchart of setting an advertisement creative by an advertiser based on a delivery end platform. The method for setting the advertisement creative by the advertiser based on the delivery end platform provided in this embodiment of this application mainly includes the following steps.

S401: Set the advertisement creative.

Specifically, the advertiser may first determine basic information of the advertisement creative based on an advertisement delivery requirement. For example, the basic information may include but is not limited to a delivery receiving application, an advertisement slot of the delivery receiving application, a text display language, and the like. The delivery end platform may display an advertisement creative design interface based on the basic information selected by the advertiser, so that the advertiser may set, on the advertisement creative interface, at least one advertisement creative corresponding to the advertisement slot of the delivery receiving application.

Further, the advertiser may set corresponding expected payment information for each advertisement creative.

**In** an example, FIG. 5 shows an advertisement creative design interface. A template display interface and an advertisement creative editing interface are displayed on the advertisement creative design interface. A plurality of creative elements for displaying different types of advertisement materials are displayed on the template display interface. An edit box that matches size information of the advertisement slot of the delivery receiving application may be displayed on the advertisement creative editing interface. For example, the size information may include a shape and a size of the advertisement slot. The advertiser may drag a required creative element to the edit box on the advertisement creative editing interface based on the advertisement delivery requirement, to obtain the advertisement creative corresponding to the advertisement slot of the delivery receiving application. Further, the advertiser may adjust a shape and a size of each creative element in the edit box.

**In** another example, as shown in FIG. 5, an advertisement creative template that matches the advertisement slot of the delivery receiving application may be further displayed on the advertisement creative design interface. The advertiser may drag the advertisement creative template to the advertisement creative editing interface, and adjust a display location of each creative element in the advertisement creative template, or add a new creative element to the advertisement creative template, or delete/replace a creative element in the advertisement creative template, to obtain the customized advertisement creative.

S402: Set a corresponding audience tag for the advertisement creative.

The advertiser may set the corresponding audience tag for each specified advertisement creative on the delivery end platform, where the audience tag may include one or more audience attributes. For example, the audience attribute may be a gender, an age, a geographical location, interest, or a consumption capability.

By way of example but not limitation, the advertiser may set a corresponding creative identifier for the advertisement creative, and set a corresponding tag identifier for each audience tag. A mapping relationship between the creative identifier and the tag identifier is set to determine a correspondence between the advertisement creative corresponding to the creative identifier and the audience tag corresponding to the tag identifier.

S403: Send the advertisement creative and the audience tag and an advertisement material library that correspond to the advertisement creative to a cloud server.

The advertiser may send the specified advertisement creative and the correspondence between the advertisement creative and the audience tag to the cloud server through the delivery end platform. Further, the advertiser may further set, on the delivery end platform, a corresponding audience tag for each advertisement material in the advertisement material library corresponding to each advertisement creative, and send, to the cloud server through the delivery end platform, the advertisement material library corresponding to the advertisement creative and a mapping relationship between the advertisement material in the advertisement material library and the audience tag.

It may be understood that the advertiser may register advertiser information on the delivery end platform in advance, and access the delivery end platform based on the registered advertiser information to view the customized advertisement creative and the audience tag and the advertisement material library that correspond to the advertisement creative. Correspondingly, the advertiser may also adjust each advertisement creative, the audience tag, and the advertisement material, for example, add a new advertisement creative to the advertisement slot of the delivery receiving application, or adjust the audience tag corresponding to the specified advertisement creative, or adjust the advertisement material corresponding to the specified advertisement creative. In this embodiment of this application, the cloud server may obtain the at least one advertisement creative set by the advertiser on the delivery end platform of a second terminal device, and update, based on the obtained at least one advertisement creative, a preset advertisement creative library corresponding to an application identifier of the application.

It should be noted that, according to the method for setting the advertisement creative based on the delivery end platform provided in the foregoing embodiment, the advertiser may design, on the delivery end platform based on different advertisement delivery requirements, a plurality of different advertisement creatives for a same advertisement slot of a same delivery receiving application, and set different audience tags for the plurality of different advertisement creatives. The following describes, based on different embodiments by using an example, a process in which the advertiser customizes different advertisement creatives for a same advertisement slot based on different advertisement delivery requirements.

In an embodiment, it is assumed that the advertiser is a game APP advertiser, and there are two advertisement delivery requirements of the game APP advertiser. One advertisement delivery requirement (namely, a requirement 1) is to attract a young game hobby user who does not install a game APP to download and install the game APP; and the other advertisement delivery requirement (namely, a requirement 2) is to display virtual commodities such as game equipment and props to a young game hobby user who has installed a game APP, to promote revenue conversion.

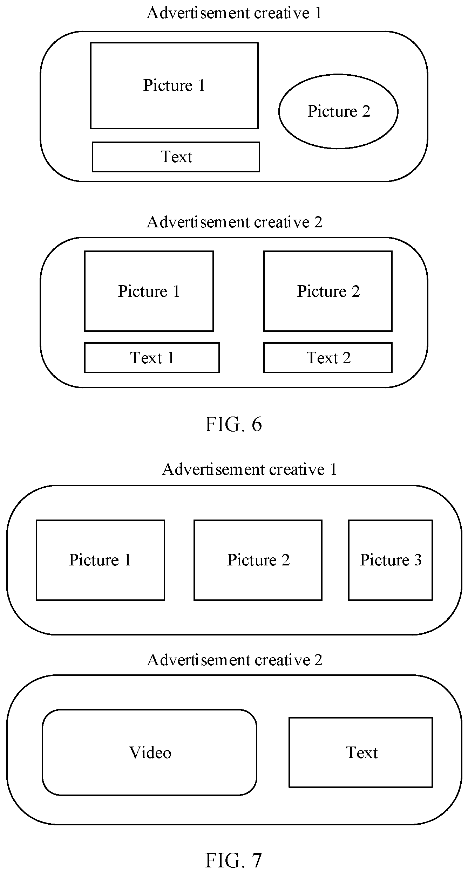

Based on the foregoing two advertisement delivery requirements, the game APP advertiser may select a banner (Banner) advertisement slot on a web page A, and set, on the delivery end platform, a corresponding advertisement creative 1 for the requirement 1 and a corresponding advertisement creative 2 for the requirement 2. As shown in FIG. 6, creative elements in the advertisement creative 1 set for the requirement 1 include a picture 1, a picture 2, and a text, and locations of the picture 1 and the text are respectively used to display a game interface image and a game text introduction, the picture 2 is used to display a download link of the game APP in a display form of a game APP icon. As shown in FIG. 6, creative elements in the advertisement creative 2 set for the requirement 2 includes a picture 1, a text 1 corresponding to the picture 1, a picture 2, and a text 2 corresponding to the picture 2. Each picture and the text corresponding to the picture may be used to display a game equipment picture and a text introduction corresponding to the game equipment picture. In this embodiment, based on the requirement 1, an audience tag L1 corresponding to the advertisement creative 1 may include: a game enthusiast aged 28 to 36 who does not install the game APP. Based on the requirement 2, an audience tag L2 corresponding to the advertisement creative 2 may include a game enthusiast aged 28 to 36 who has installed the game APP.

In another embodiment, it is assumed that the advertiser is an e-commerce APP advertiser, and there are two advertisement delivery requirements of the advertiser. One advertisement delivery requirement (namely, a requirement 1) is to display a commodity advertisement in an online store to a young user in a picture-text display style, to increase advertisement exposure; and the other advertisement delivery requirement (namely, a requirement 2) is to display a commodity advertisement in an online store to an elderly user in a banner video display style, so that the elderly user can easily view the commodity advertisement.

Based on the foregoing two advertisement delivery requirements, the e-commerce APP advertiser may select a banner (Banner) advertisement slot on a web page B. If a plurality of advertisement creative templates corresponding to the banner (Banner) advertisement slot on the web page B are set on the delivery end platform, and include a multi-picture carousel advertisement creative, an advertisement creative including a picture and a link, and a video advertisement creative. The e-commerce APP advertiser may select one of the advertisement creative modules or adjust an advertisement creative template, and separately set the advertisement creative 1 corresponding to the requirement 1 and the advertisement creative 2 corresponding to the requirement 2. For example, as shown in FIG. 7, the multi-picture carousel advertisement creative that is used to display a commodity picture and that is in the advertisement creative template may be set to the advertisement creative 1 corresponding to the requirement 1. In addition, a text creative element may be added to the video advertisement creative in the plurality of advertisement creative templates, and then the advertisement creative 2 that corresponds to the requirement 2 and that is used to display a commodity video and a text introduction corresponding to the commodity video is generated. In this embodiment, based on the requirement 1, the audience tag L1 corresponding to the advertisement creative 1 may be set to: people aged 28 to 50. Based on the requirement 2, the audience tag L2 corresponding to the advertisement creative 2 may be set to: people whose age is greater than 50.

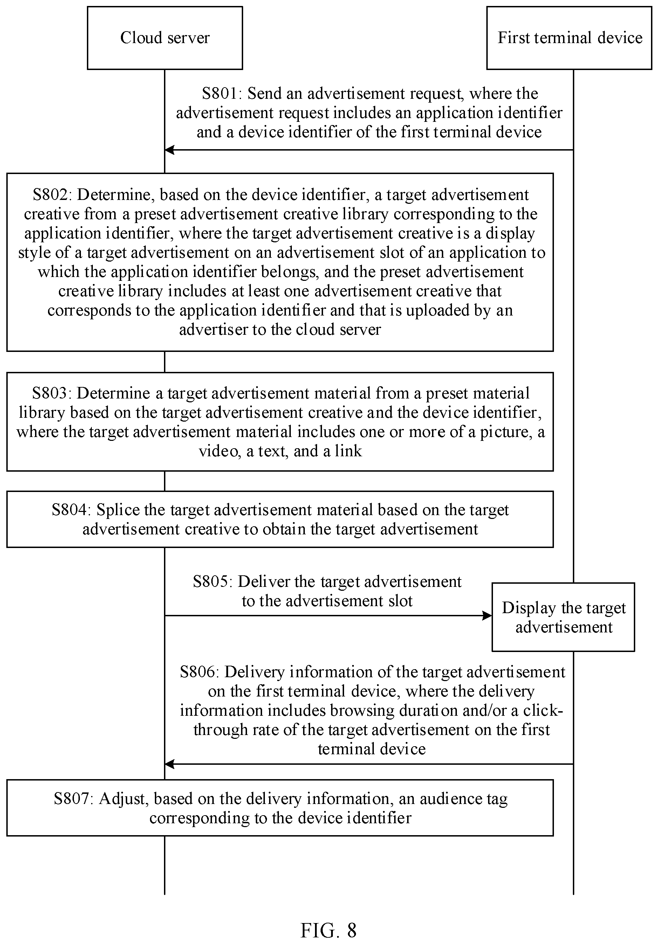

In a possible implementation, refer to a diagram of interaction between a cloud server and a first terminal device shown in FIG. 8. The advertisement delivery method provided in this embodiment of this application is applied to the cloud server, and mainly relates to a process in which after receiving an advertisement request sent by the first terminal device, the cloud server determines, based on an application identifier and a device identifier of the first terminal device in the advertisement request, a target advertisement creative and a corresponding target advertisement material respectively from an advertisement creative library and an advertisement material library that are preset by an advertiser. The following describes, by using an example, the advertisement delivery method provided in this embodiment of this application with reference to the interaction diagram shown in FIG. 8.

S801: Receive the advertisement request sent by the first terminal device, where the advertisement request includes the application identifier and the device identifier of the first terminal device.

It should be noted that the first terminal device may be an electronic device that supports running of an APP (Application, application) and that can display an advertisement to a user, for example, a mobile phone, a tablet computer, a notebook computer, or a wearable device.

The device identifier of the first terminal device may be a unique device identifier (unique device identifier, UDID) or an open anonymous device identifier (open anonymous device identifier, OAID). The open anonymous device identifier is also referred to as an advertisement identifier.

The application identifier (application identifier, AID) includes a registered application provider and a dedicated application identifier extension. The cloud server may determine, based on the device identifier, a type of the first terminal device that sends the advertisement request, and determine, based on the application identifier, a type of an application to which the application identifier belongs and advertisement slot information in the application. When a same display interface of the application of the first terminal device includes a plurality of advertisement slots, the cloud server may determine advertisement slot information of each advertisement slot based on the application identifier. For example, the advertisement slot may be an advertisement slot inserted in web news, a splash screen of the APP, an information flow of news, or the like. The advertisement slot information may include a type of the advertisement slot and size information of the advertisement slot.

S802: Determine, based on the device identifier, the target advertisement creative from the preset advertisement creative library corresponding to the application identifier, where the target advertisement creative is a display style of a target advertisement on an advertisement slot of the application to which the application identifier belongs, and the preset advertisement creative library includes at least one advertisement creative that corresponds to the application identifier and that is uploaded by the advertiser to the cloud server.

It should be noted that the cloud server prestores a plurality of advertisement creatives set by the advertiser for advertisement slots of different applications, an audience tag corresponding to each advertisement creative, and an advertisement material library corresponding to each advertisement creative. The preset advertisement creative library corresponding to the application identifier includes the at least one advertisement creative that can be displayed on the advertisement slot of the application to which the application identifier belongs.

In this embodiment of this application, the cloud server may send, to user information big data platform based on the obtained device identifier, a request for obtaining an audience tag of a user corresponding to the device identifier, and determine based on a result for obtaining the audience tag from the user information big data platform, the target advertisement creative from the preset advertisement creative library corresponding to the application identifier. For example, the user information big data platform may be a cloud server that corresponds to the first terminal device and that stores user information corresponding to the device identifier. The following describes, based on different obtaining results by using an example, a method for determining, by the cloud server, the target advertisement creative from the preset advertisement creative library corresponding to the application identifier in this application.

Embodiment 1: The cloud server obtains the corresponding audience tag from the user information big data platform based on the device identifier.

By way of example but not limitation, after receiving the advertisement request sent by the first terminal device, the cloud server may send a query request to the user information big data platform, where the query request includes the device identifier of the first terminal device. The user information big data platform may determine the corresponding user information based on the device identifier, and perform big data analysis on the user information, to generate the audience tag corresponding to the device identifier of the terminal device, and then send the generated audience tag to the cloud server.

For example, the user information may include but is not limited to: geographical information of a province in which the user is located that is obtained through GPS positioning, installation information of an APP on the terminal device, usage of the APP (for example, a use frequency and use duration of the APP), a cookie tag including web page browsing information of the user, registered personal information, and the like. For example, it is assumed that the user information obtained by the user information big data platform based on the device identifier includes: A plurality of shopping APPs are installed on the first terminal device and are used frequently, and a female software assistant is further installed on the first terminal device. The user information big data platform may determine, based on the obtained user information, that the audience tag corresponding to the device identifier of the first terminal device is a woman who loves shopping.

Optionally, after receiving, for the first time, the request that is for obtaining the audience tag of the first terminal device and that is sent by the cloud server, and generating, through big data analysis, the audience tag corresponding to the device identifier of the first terminal device, the user information big data platform may bind the device identifier of the first terminal device to the audience tag, and store the device identifier of the first terminal device and the corresponding audience tag. In this way, after the request that is for obtaining the audience tag of the first terminal device and that is sent by the cloud server is received next time, the user information big data platform may directly send, to the cloud server, the prestored audience tag corresponding to the device identifier of the first terminal device.

In Embodiment 1, the method for determining, by the cloud server from the preset advertisement creative library corresponding to the application identifier, the target advertisement creative corresponding to the audience tag includes: The cloud server may determine an audience tag set corresponding to the preset advertisement creative library, where the audience tag set includes the audience tag corresponding to each advertisement creative in the preset advertisement creative library; and determining, from the audience tag set, at least one first audience tag that matches the audience tag corresponding to the device identifier, to determine the target advertisement creative from at least one advertisement creative corresponding to the at least one first audience tag. "Match" means that audience attributes in the first audience tag include all audience attributes in the audience tag corresponding to the device identifier, or a percentage of a quantity of people attributes in the audience tag corresponding to the device identifier that are same as those in the first audience tag in a total quantity of audience attributes in the audience tag corresponding to the device identifier is greater than a preset threshold.

In an example, each audience tag in the audience tag set may match the audience tag corresponding to the device identifier. If one first audience tag that matches the audience tag corresponding to the device identifier exists in the audience tag set, an advertisement creative corresponding to the first audience tag in the preset advertisement creative library is determined as the target advertisement creative.

In another example, each audience tag in the audience tag set may match the audience tag corresponding to the device identifier. If a plurality of first audience tags that match the audience tag corresponding to the device identifier exists in the audience tag set, that is, if a plurality of advertisement creatives that match the audience tag corresponding to the device identifier exist in the preset advertisement creative library, an advertisement creative with a highest effective cost per mille (effective cost per mille, ECPM) in the plurality of advertisement creatives is determined as the target advertisement creative.

The effective cost per mille is an estimated advertisement revenue that can be obtained every 1000 times of displaying the application of the terminal device, and ECPM = bid of the advertiser × PCTR × PCVR × price adjustment factor. The bid of the advertiser may be expected payment information set by the advertiser on the delivery end platform for each advertisement creative. The PCTR (predict click-through rate) is an estimated click-through rate, and is specifically obtained by dividing an actual quantity of click-through times of an advertisement by a quantity of display times of the advertisement. The PCVR (predict conversion rate) is an estimated conversion rate, and is specifically a ratio of a quantity of times of converting to "Next" effect after the advertisement slot is clicked (for example, a user places an order on a web page to purchase a commodity or downloads an application after clicking the advertisement slot) to a quantity of times of clicking the advertisement.

In another example, the cloud server obtains, from the user information big data platform, the audience tag corresponding to the device identifier of the first terminal device, but the first audience tag that matches the audience tag corresponding to the device identifier does not exist in the prestored audience tag set corresponding to the preset advertisement creative library, that is, no advertisement creative that matches the audience tag corresponding to the device identifier exists in the preset advertisement creative library. In this case, an advertisement creative with a highest effective cost per mille in the preset advertisement creative library is determined as the target advertisement creative.

For example, it is assumed that the preset advertisement creative library corresponding to the application identifier includes two advertisement creatives, namely, an advertisement creative A and an advertisement creative B, and the preset audience tag set includes an audience tag "Cosmetics enthusiasts" corresponding to the advertisement creative A and an audience tag "Sports enthusiasts" corresponding to the advertisement creative B. The cloud server obtains, from the user information big data platform based on the device identifier, that the corresponding audience tag is "Food enthusiasts", and the cloud server determines, according to a matching algorithm, that "Food enthusiast" does not match "Cosmetics enthusiasts" and "Sports enthusiasts" in the preset audience tag set, that is, a first audience tag that matches the audience tag "Food enthusiasts" of the device identifier does not exist in the audience tag set. In addition, an effective cost per mille of the advertisement creative A is higher than an effective cost per mille of the advertisement creative B. In this case, the cloud server may determine that the advertisement creative A is the target advertisement creative.

Embodiment 2: The cloud server obtains no corresponding audience tag from the user information big data platform based on the device identifier.

It should be noted that, if the user uses the first terminal device for the first time, and the first terminal device does not generate the user information corresponding to the device identifier, or the device identifier of the first terminal device changes, the user information big data platform may not store the user information corresponding to the device identifier of the first terminal device, or the user information big data platform may fail to find user information corresponding to a changed device identifier of the first terminal device. Consequently, the user information big data platform cannot generate the corresponding audience tag based on the user information, and the cloud server cannot obtain, from the user information big data platform, the audience tag corresponding to the device identifier of the first terminal device.

For example, if the device identifier in the advertisement request sent by the first terminal device to the cloud server is an open anonymous device identifier, when the user resets the open anonymous device identifier of the first terminal device, and the first terminal device sends the advertisement request to the cloud server for the first time based on a reset open anonymous device identifier, the device identifier of the first terminal device may change, the user information big data platform may not prestore user information corresponding to the reset open anonymous identifier, and consequently, the user information big data platform cannot generate the corresponding audience tag. **In** this case, the cloud server cannot obtain, from the user information big data platform, the audience tag corresponding to the device identifier of the first terminal device.

**In** Embodiment 2, if the cloud server obtains, from the user information big data platform based on the device identifier, no audience tag corresponding to the device identifier of the first terminal device, the cloud server may determine, as the target advertisement creative, an advertisement creative with a highest effective cost per mille in the preset advertisement creative library. For a method for determining the target advertisement creative from the preset advertisement creative library based on the effective cost per mille, refer to related descriptions in Embodiment 1. Details are not described herein again.

S803: Determine the target advertisement material from the preset material library based on the target advertisement creative and the device identifier, where the target advertisement material includes one or more of a picture, a video, a text, and a link.

**In** this embodiment of this application, a type of an advertisement material included in the preset material library corresponding to the target advertisement creative may be determined based on a type of an advertisement material required in the target advertisement creative and a quantity of advertisement materials of each type. For example, the type of the advertisement material may be a picture, a video, a text, or a link.

The advertisement material corresponding to the target advertisement creative needs to include personalized information (for example, an enterprise logo or a product picture) that is of the advertiser and that corresponds to the target advertisement creative, so that the target advertisement creative has strong personalized information orientation. This enhances perception of the advertiser by a user who uses a terminal device.

**In** an embodiment, when the audience tag that is of the target advertisement creative and that is prestored in the cloud server is completely the same as the audience tag that is obtained from the user information big data platform and that corresponds to the device identifier of the first terminal device, or when the prestored audience tag of the target advertisement creative includes all audience attributes in the audience tag corresponding to the device identifier of the first terminal device, the cloud server may determine, from the preset material library based on the audience tag corresponding to the target advertisement creative, the target advertisement material that matches the audience tag.

For example, it is assumed that the target advertisement creative is a game video and a game APP download link, the prestored audience tag corresponding to the target advertisement creative includes "Young people aged 20 to 40 who like games and do not install a first game APP", and the cloud server obtains, from the user information big data platform, the audience tag corresponding to the device identifier of the first terminal device, including "People who like games and do not install a first game APP". It may be determined that the prestored audience tag of the target advertisement creative includes all audience attributes in the audience tag corresponding to the device identifier, types of the advertisement material that is in the preset material library and that corresponds to the target advertisement creative include a video and a download link of an APP, and target advertisement material determined by the cloud server from the corresponding preset material library based on the prestored audience tag corresponding to the target advertisement creative may include a commentary video of a first game and a download link of the first game APP.

In another embodiment, when the audience attribute in the audience tag that is of the target advertisement creative and that is prestored in the cloud server is not completely the same as the audience attribute in the audience tag that corresponds to the device identifier of the first terminal device and that is obtained from the user information big data platform, to improve a matching degree between the target advertisement material and the user of the first terminal device, the target advertisement material may be determined from the preset material library based on the audience tag that is of the target advertisement creative and that is prestored in the cloud server and the audience tag corresponding to the device identifier of the first terminal device. For a method for obtaining, by the cloud server from the user information big data platform, the audience tag corresponding to the device identifier of the first terminal device, refer to related descriptions in the foregoing embodiments. Details are not described herein again.

For example, it is assumed that the target advertisement creative is carousel of three pictures, the prestored audience tag of the target advertisement creative is "Young people aged 28 to 36", and the audience tag that is obtained by the cloud server from the user information big data platform and that corresponds to the device identifier of the first terminal device includes "People aged 29 who like cosmetics". In this case, it may be determined that the audience attributes in the prestored audience tag of the target advertisement creative are not completely the same as the audience attributes in the audience tag corresponding to the device identifier, the type of the advertisement material that is in the preset material library and that corresponds to the target advertisement creative is a picture, and there are three pictures. The cloud server may determine, from the preset material library based on the audience tag corresponding to the target advertisement creative and the audience tag "Young people aged 28 to 36 who like cosmetics" corresponding to the device identifier, that the target advertisement material is pictures of three cosmetic products.

S804: Splice the target advertisement material based on the target advertisement creative to obtain the target advertisement.

Specifically, after the target advertisement material corresponding to the target advertisement creative is determined, advertisement materials in the target advertisement material may be spliced based on distribution locations that are of the advertisement materials and that are specified in the target advertisement creative, and spliced advertisement materials are rendered, to generate the target advertisement, so that the target advertisement meets a requirement on a size of the advertisement slot of the application in the first terminal device.

S805: Deliver the target advertisement to the advertisement slot.

The cloud server may send the target advertisement to the first terminal device. **In** this way, after receiving the target advertisement sent by the cloud server, the first terminal device displays the target advertisement on the advertisement slot of the application corresponding to the application identifier.

It should be noted that, if a same display interface of the application of the first terminal device includes a plurality of advertisement slots, when receiving the advertisement request from the first terminal device, the cloud server may determine a corresponding target advertisement for each advertisement slot on the same display interface of the application according to the method in steps S801 to S805.

**In** another possible implementation, after delivering the target advertisement to the advertisement slot of the first terminal device, the cloud server may obtain a degree of interest of the user in the target advertisement, to adjust, based on the degree of interest of the user, the audience tag corresponding to the device identifier. **In** this way, when the advertisement request sent by the first terminal device is received next time, the target advertisement creative and the target advertisement material that better meet the user are matched for the first terminal device based on an adjusted audience tag. Therefore, after step S805, the advertisement delivery method provided in this embodiment of this application further includes steps S806 and S807.

S806: Obtain delivery information of the target advertisement on the first terminal device, where the delivery information includes browsing duration and/or a click-through rate of the target advertisement on the first terminal device.

In this embodiment of this application, the delivery information of the target advertisement on the first terminal device indicates a degree of interest of the user of the first terminal device in the target advertisement. For example, the delivery information of the target advertisement on the first terminal device may include but is not limited to the duration for browsing the target advertisement by the user and/or whether the user clicks the target advertisement. If the duration for browsing the target advertisement by the user is greater than preset duration or the user clicks the target advertisement, it indicates that the user is highly interested in the target advertisement, and the audience tag corresponding to the device identifier does not need to be adjusted. If the duration for browsing the target advertisement by the user is less than preset duration and/or the user does not click the target advertisement, it indicates that the user is less interested in the target advertisement, and the audience tag corresponding to the device identifier needs to be adjusted.

S807: Adjust, based on the delivery information, the audience tag corresponding to the device identifier.

In an example, a method for adjusting, by the cloud server based on the delivery information, the audience tag corresponding to the device identifier of the first terminal device may include: obtaining, from the user information big data platform based on the device identifier, the audience tag corresponding to the device identifier, and inputting the delivery information and the audience tag into a trained deep learning model for processing, to obtain an updated audience tag corresponding to the device identifier.

It may be understood that, in this embodiment of this application, the cloud server prestores different advertisement creatives and advertisement materials corresponding to the advertisement creatives that are preset by the advertiser for different types of users. When receiving the advertisement request sent by the first terminal device, the cloud server may first determine, from the preset advertisement creative library corresponding to the application identifier, the target advertisement creative that matches the user indicated by the device identifier of the first terminal device, and then determine the target advertisement material from the preset material library based on the target advertisement creative and the audience tag corresponding to the device identifier, to deliver, in a display style indicated by the target advertisement creative, the target advertisement material to the advertisement slot of the application to which the application identifier belongs. For different types of users, content of the displayed target advertisement is different, and display styles of the target advertisement are different, so that the delivered target advertisement better meets interest of the users, and a requirement of the advertiser for targeted advertisement delivery to different types of users are met. This improves delivery effect of an online advertisement.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

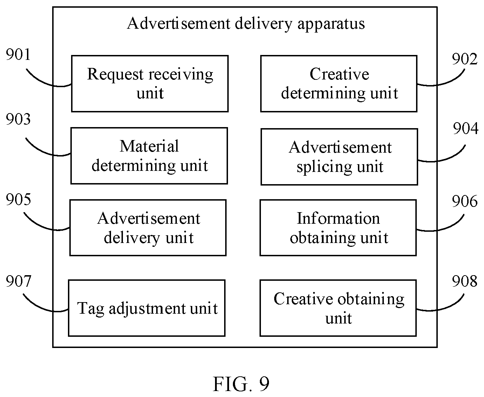

Corresponding to the advertisement delivery method provided in the foregoing embodiments, FIG. 9 is a block diagram of a structure of an advertisement delivery apparatus according to an embodiment of this application. For ease of description, only parts related to embodiments of this application are shown.

As shown in FIG. 9, the advertisement delivery apparatus includes: a request receiving unit 901, a creative determining unit 902, a material determining unit 903, an advertisement splicing unit 904, and an advertisement delivery unit 905.

The request receiving unit 901 is configured to receive an advertisement request sent by a first terminal device, where the advertisement request includes an application identifier and a device identifier of the first terminal device.

The creative determining unit 902 is configured to determine, based on the device identifier, a target advertisement creative from a preset advertisement creative library corresponding to the application identifier, where the target advertisement creative is a display style of a target advertisement on an advertisement slot of an application to which the application identifier belongs, and the preset advertisement creative library includes at least one advertisement creative that corresponds to the application identifier and that is uploaded by an advertiser to a cloud server.

The material determining unit 903 is configured to determine a target advertisement material from a preset material library based on the target advertisement creative and the device identifier, where the target advertisement material includes one or more of a picture, a video, a text, and a link.

The advertisement splicing unit 904 is configured to splice the target advertisement material based on the target advertisement creative to obtain the target advertisement.

The advertisement delivery unit 905 is configured to deliver the target advertisement to the advertisement slot.

Optionally, that the creative determining unit 902 determines, based on the device identifier, a target advertisement creative from a preset advertisement creative library corresponding to the application identifier specifically includes: if a corresponding audience tag is obtained from a user information big data platform based on the device identifier, determining, from the preset advertisement creative library corresponding to the application identifier, the target advertisement creative corresponding to the audience tag.

Optionally, that the creative determining unit 902 determines, from the preset advertisement creative library corresponding to the application identifier, the target advertisement creative corresponding to the audience tag includes: if a plurality of advertisement creatives that match the audience tag exist in the preset advertisement creative library, determining, as the target advertisement creative, an advertisement creative with a highest effective cost per mille in the plurality of advertisement creatives.

Optionally, the creative determining unit 902 is further configured to: if no advertisement creative that matches the audience tag exists in the preset advertisement creative library, determine, as the target advertisement creative, an advertisement creative with a highest effective cost per mille in the preset advertisement creative library.

Optionally, the creative determining unit 902 is further configured to: if no corresponding audience tag is obtained from the user information big data platform based on the device identifier, determine, as the target advertisement creative, an advertisement creative with a highest effective cost per mille in the preset advertisement creative library.

Optionally, the advertisement delivery apparatus further includes an information obtaining unit 906 and a tag adjustment unit 907. The information obtaining unit 906 is configured to obtain delivery information of the target advertisement on the first terminal device, where the delivery information includes browsing duration and/or a click-through rate of the target advertisement on the first terminal device. The tag adjustment unit 907 is configured to adjust, based on the delivery information, the audience tag corresponding to the device identifier.

Optionally, the advertisement delivery apparatus further includes a creative obtaining unit 908, configured to: obtain at least one advertisement creative that is set by the advertiser on a second terminal device, and update the preset advertisement creative library based on the at least one advertisement creative.

It should be understood that, for descriptions of the apparatus embodiment, refer to related descriptions of the electronic device and the foregoing advertisement delivery method embodiments. Implementation principles and technical effects of the apparatus embodiment are similar to those of the foregoing method embodiments. Details are not described herein again.

According to the method provided in the foregoing embodiments, embodiments of this application further provide the following content.

An embodiment of this application provides a computer program product. The program product includes a program. When the program is run by an electronic device, the electronic device is enabled to perform the advertisement delivery method in the foregoing embodiments.

An embodiment of this application provides a computer-readable storage medium. The computer-readable storage medium stores a computer program. When the computer program is executed by a processor, the advertisement delivery method in the foregoing embodiments is implemented.

An embodiment of this application provides a chip. The chip includes a memory and a processor. The processor executes a computer program stored in the memory, to control the foregoing electronic device to perform the advertisement delivery method in the foregoing embodiments.

It should be understood that, the processor mentioned in embodiments of this application may be a central processing unit (central processing unit, CPU), or may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

A person skilled in the art may clearly understand that, for the purpose of convenient and brief description, division into the foregoing functional units and modules is merely used as an example for illustration. During actual application, the foregoing functions may be allocated to different functional units and modules for implementation based on a requirement. In other words, an inner structure of the apparatus is divided into different functional units or modules, to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of software functional unit. In addition, specific names of the functional units or modules are merely for ease of distinguishing between the functional units or modules, but are not intended to limit the protection scope of this application. In the foregoing embodiments, descriptions of embodiments have respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus and method may be implemented in other manners. For example, the described system embodiment is merely an example. For example, division into the modules or units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and parts displayed as units may or may not be physical units, may be located in one location, or may be distributed on a plurality of network units. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments may be implemented. The computer program includes computer program code. The computer program code may be in a source code form, an object code form, an executable file form, some intermediate forms, or the like. The computer-readable medium may include at least any entity or apparatus that can carry the computer program code to a large-screen device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunication signal according to legislation and patent practices.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An advertisement delivery method, applied to a cloud server, wherein the method comprises:
receiving an advertisement request sent by a first terminal device, wherein the advertisement request comprises an application identifier and a device identifier of the first terminal device;
determining, based on the device identifier, a target advertisement creative from a preset advertisement creative library corresponding to the application identifier, wherein the target advertisement creative is a display style of a target advertisement on an advertisement slot of an application to which the application identifier belongs, and the preset advertisement creative library comprises at least one advertisement creative that corresponds to the application identifier and that is uploaded by an advertiser to the cloud server;
determining a target advertisement material from a preset material library based on the target advertisement creative and the device identifier, wherein the target advertisement material comprises one or more of a picture, a video, a text, and a link;
splicing the target advertisement material based on the target advertisement creative to obtain the target advertisement; and
delivering the target advertisement to the advertisement slot.

2. The method according to claim 1, wherein the determining, based on the device identifier, a target advertisement creative from a preset advertisement creative library corresponding to the application identifier comprises:
if a corresponding audience tag is obtained from a user information big data platform based on the device identifier, determining, from the preset advertisement creative library corresponding to the application identifier, the target advertisement creative corresponding to the audience tag.

3. The method according to claim 2, wherein the determining, from the preset advertisement creative library corresponding to the application identifier, the target advertisement creative corresponding to the audience tag comprises:
if a plurality of advertisement creatives that match the audience tag exist in the preset advertisement creative library, determining, as the target advertisement creative, an advertisement creative with a highest effective cost per mille in the plurality of advertisement creatives.

4. The method according to claim 2 or 3, wherein the method further comprises:
if no advertisement creative that matches the audience tag exists in the preset advertisement creative library, determining, as the target advertisement creative, an advertisement creative with a highest effective cost per mille in the preset advertisement creative library.

5. The method according to any one of claims 2 to 4, wherein the method further comprises:
if no corresponding audience tag is obtained from the user information big data platform based on the device identifier, determining, as the target advertisement creative, an advertisement creative with a highest effective cost per mille in the preset advertisement creative library.

6. The method according to any one of claims 2 to 5, wherein the method further comprises:
obtaining delivery information of the target advertisement on the first terminal device, wherein the delivery information comprises browsing duration and/or a click-through rate of the target advertisement on the first terminal device; and
adjusting, based on the delivery information, the audience tag corresponding to the device identifier.

7. The method according to any one of claims 2 to 6, wherein the method further comprises:
obtaining at least one advertisement creative that is set by the advertiser on a second terminal device; and
updating the preset advertisement creative library based on the at least one advertisement creative.

8. An advertisement delivery apparatus, comprising:
a request receiving unit, configured to receive an advertisement request sent by a first terminal device, wherein the advertisement request comprises an application identifier and a device identifier of the first terminal device;
a creative determining unit, configured to determine, based on the device identifier, a target advertisement creative from a preset advertisement creative library corresponding to the application identifier, wherein the target advertisement creative is a display style of a target advertisement on an advertisement slot of an application to which the application identifier belongs, and the preset advertisement creative library comprises at least one advertisement creative that corresponds to the application identifier and that is uploaded by an advertiser to a cloud server;
a material determining unit, configured to determine a target advertisement material from a preset material library based on the target advertisement creative and the device identifier, wherein the target advertisement material comprises one or more of a picture, a video, a text, and a link;
an advertisement splicing unit, configured to splice the target advertisement material based on the target advertisement creative to obtain the target advertisement; and
an advertisement delivery unit, configured to deliver the target advertisement to the advertisement slot.

9. The apparatus according to claim 8, wherein that the creative determining unit determines, based on the device identifier, a target advertisement creative from a preset advertisement creative library corresponding to the application identifier comprises:
if a corresponding audience tag is obtained from a user information big data platform based on the device identifier, determining, from the preset advertisement creative library corresponding to the application identifier, the target advertisement creative corresponding to the audience tag.

10. The apparatus according to claim 9, wherein that the creative determining unit determines, from the preset advertisement creative library corresponding to the application identifier, the target advertisement creative corresponding to the audience tag comprises:
if a plurality of advertisement creatives that match the audience tag exist in the preset advertisement creative library, determining, as the target advertisement creative, an advertisement creative with a highest effective cost per mille in the plurality of advertisement creatives.

11. The apparatus according to claim 9 or 10, wherein the creative determining unit is further configured to:
if no advertisement creative that matches the audience tag exists in the preset advertisement creative library, determine, as the target advertisement creative, an advertisement creative with a highest effective cost per mille in the preset advertisement creative library.

12. The apparatus according to any one of claims 9 to 11, wherein the creative determining unit is further configured to:
if no corresponding audience tag is obtained from the user information big data platform based on the device identifier, determine, as the target advertisement creative, an advertisement creative with a highest effective cost per mille in the preset advertisement creative library.

13. The apparatus according to any one of claims 9 to 12, wherein the apparatus further comprises:
an information obtaining unit, configured to obtain delivery information of the target advertisement on the first terminal device, wherein the delivery information comprises browsing duration and/or a click-through rate of the target advertisement on the first terminal device; and
a tag adjustment unit, configured to adjust, based on the delivery information, the audience tag corresponding to the device identifier.

14. The apparatus according to any one of claims 9 to 13, wherein the apparatus further comprises:
a creative obtaining unit, configured to: obtain at least one advertisement creative that is set by the advertiser on a second terminal device, and update the preset advertisement creative library based on the at least one advertisement creative.

15. A cloud server, comprising a processor, wherein the processor is configured to run a computer program stored in a memory, to implement the method according to any one of claims 1 to 7.

16. A computer-readable storage medium, wherein the computer-readable storage medium stores a computer program, and when the computer program is executed by a processor, the method according to any one of claims 1 to 7 is implemented.
